# EUROPÄISCHE PATENTSCHRIFT

(11) **EP 4 361 800 B1**
(45) Veröffentlichungstag und Bekanntmachung des Hinweises auf die Patenterteilung: **25.09.2024**
(21) Anmeldenummer: 22204261.6
(22) Anmeldetag: 27.10.2022
(51) Int. Cl.: G06F 8/654, G06F 21/57

(54) **VERFAHREN ZUR VERBESSERUNG DER BETRIEBSSICHERHEIT EINES STEUERGERÄTS SOWIE STEUERGERÄT**
METHOD FOR IMPROVING THE OPERATIONAL RELIABILITY OF A CONTROL DEVICE, AND CONTROL DEVICE
PROCÉDÉ D'AMÉLIORATION DE LA SÉCURITÉ DE FONCTIONNEMENT D'UN APPAREIL DE COMMANDE AINSI QU'APPAREIL DE COMMANDE

(43) Veröffentlichungstag der Anmeldung: 01.05.2024
(73) Patentinhaber: RAFI GmbH & Co. KG, 88276 Berg (DE)
(72) Erfinder: Strobel, Florian, 88356 Ostrach (DE); Rottweiler, Patrick, 88339 Bad Waldsee (DE); Fleischer, Frank, 88368 Bergatreute (DE); Rost, Markus, 88364 Wolfegg (DE); Siller, Janik, 88525 Heudorf (Dürmentingen) (DE); Bieser, Niklas, 88045 Friedrichshafen (DE)
(74) Vertreter: Christ, Niko

(56) Entgegenhaltungen:
- US-B1- 6 360 362

## Beschreibung

Die vorliegende Erfindung betrifft ein Verfahren zur Verbesserung der Betriebssicherheit eines Steuergeräts mit einem Mikrocontroller, welchem ein Flashspeicher zur Speicherung von Programmcode zugeordnet ist, wobei der Flashspeicher einen Resethandler zum initialen Aufruf eines Bootloaders nach einem Neustart, einen Bootloaderbereich, in welchem der Bootloader gespeichert ist und einen Applikationsbereich, in welchem eine Applikation zum Ablauf auf dem Mikrocontroller gespeichert ist, aufweist, sowie ein solches Steuergerät.

Steuergeräte sind in vielen Bereichen der Technik üblich und verbreitet. Dabei ist regelmäßig vorgesehen, dass eine Firmware auf den Geräten aufgespielt ist, welche grundlegende Funktionen des Steuergeräts sicherstellt. Wie andere Software unterliegt auch die Firmware der fortwährenden Entwicklung, so dass es sinnvoll sein kann, regelmäßig oder bei entsprechender Verfügbarkeit ein Firmwareupdate durchzuführen.

Im Zuge eines solchen Firmwareupdates wird zunächst ein Parameter gesetzt, welcher das Firmwareupdate auslöst und dann im Rahmen eines Neustarts des Steuergeräts ein Download von einer bereitgestellten Quelle durchgeführt. Sobald das Kommando zum Update aufgerufen wird, erfolgt jedoch zunächst ein Verbindungsabbruch und ein Neustart. Dies kann aber im Ergebnis, trotzdem Updates idealerweise zur Fehlerbehebung und zur Weiterentwicklung der Funktionalität und Sicherheit des Steuergeräts dienen sollen, dazu führen, dass von einem Angreifer ein kompromittiertes Update eingespielt wird, welches das Steuergerät beschädigt und seine Funktion verhindert. Gerade in sicherheitskritischen Bereichen, etwa in der chemischen Industrie, kann ein solcher Angriff, welcher im Allgemeinen von außen verübt wird, einen großen Schaden verursachen, indem schadhafte Firmware eingespielt wird. Eine logische Konsequenz daraus wäre es zwar, Firmwareupdates grundsätzlich in sicherheitskritischen Bereichen nicht zuzulassen, jedoch würden dann bekannte Fehler und Sicherheitslücken nicht mehr geschlossen werden können, so dass diese Lösung zu verwerfen ist.

Ein solches Verfahren der eingangs genannten Art ist beispielsweise aus der US 6,360,362 B1 vorbekannt. Dieses offenbart ein Verfahren zum Aktualisieren der Firmware zwischen einem bildgebenden Gerät und einem Host-System, wobei das Hostsystem feststellt, dass die Firmware auf dem bildgebenden Gerät nicht mit einer Konfiguration des Hostsystems kompatibel ist. Als Reaktion auf die Erkennung der Inkompatibilität wird ein aktualisiertes Firmware-Image vom Host-System an das bildgebende Gerät übertragen.

Vor diesem Hintergrund stellt sich der vorliegenden Erfindung die Aufgabe, ein Verfahren zur Verbesserung der Betriebssicherheit eines Steuergeräts mit einem Mikrocontroller und ein solches Steuergerät zu schaffen, bei denen Firmwareupdates weder grundsätzlich zugelassen noch grundsätzlich ausgeschlossen sind, bei denen aber ein Angriff durch ein schadhaftes Firmwareupdate dennoch bedarfsweise ausgeschlossen werden kann.

Gelöst wird diese Aufgabe durch ein Verfahren zur Verbesserung der Betriebssicherheit eines Steuergeräts mit einem Mikrocontroller gemäß den Merkmalen des unabhängigen Anspruchs 1, sowie durch ein entsprechendes Steuergerät gemäß den Merkmalen des nebengeordneten Anspruchs 7. Sinnvolle Ausgestaltungen sowohl eines solchen Verfahrens als auch eines solchen Steuergeräts können den sich jeweils anschließenden abhängigen Ansprüchen entnommen werden.

Vorgesehen ist ein Verfahren zur Verbesserung der Betriebssicherheit eines Steuergeräts mit einem Mikrocontroller, welchem ein Flashspeicher zur Speicherung von Programmcode zugeordnet ist, wobei der Flashspeicher einen Resethandler zum initialen Aufruf eines Bootloaders nach einem Neustart, einen Bootloaderbereich, in welchem der Bootloader gespeichert ist und einen Applikationsbereich, in welchem eine Applikation zum Ablauf auf dem Mikrocontroller gespeichert ist, aufweist. Ein solches Verfahren ist erfindungsgemäß dadurch gekennzeichnet, dass der Bootloaderbereich überschrieben und dem Resethandler unter Umgehung des Bootloaders ein direkter Verweis auf die Applikation in dem Applikationsbereich zugeordnet wird.

Regelmäßig wird nach einem Start des Steuergeräts der Mikrocontroller zunächst die Validität der Firmware anhand einer Prüfsumme prüfen und falls erforderlich ein Update ausführen. Ebenfalls kann dies beim Aufruf eines IO-Link Systemkommandos durchgeführt werden, was den Normalfall darstellt. Wenn dies nicht erforderlich sein sollte, die Applikation im Applikationsbereich des Flashspeichers starten. Dies erscheint in aller Regel auch sinnvoll, um auf diese Weise stets die neueste Firmware nutzen zu können. Die Erfindung sieht aber vor, ab einem von dem Nutzer festgelegten und sorgfältig abgewogenen Zeitpunkt auf weitere Firmwareupdates zu verzichten. Dies wird erreicht, indem zum Einen der Bootloaderbereich überschrieben wird und zum Anderen der Resethandler einen Verweis direkt auf die im Applikationsbereich des Flashspeichers abgelegten Applikation erhält. Das Überschreiben kann auf verschiedene Art und Weise erfolgen, insbesondere indem der Bootloaderbereich entweder mit einem Muster, etwa mit gleichen Zeichen, oder willkürlich überschrieben wird. Es erscheint dabei wesentlich, dass ein vollständiges Überschreiben erfolgt, nicht nur eine Freigabe eines Bereichs zum Überschreiben, wie dies beim Löschen von Speichern üblich ist. Hiermit soll auch eine spätere Wiederherstellung des Bootloaderbereichs durch einen Wiederherstellungsbefehl vermieden werden.

Mit dieser Maßnahme ist gewährleistet, dass eine Ausführung einer Updateroutine für ein Firmwareupdate nach dem Überschreibvorgang nicht mehr ausgelöst werden kann. Ein solches Verfahren schützt in erster Linie die Integrität und Verfügbarkeit der Funktionen des Steuergeräts. Dadurch kann sich indirekt eine Verbesserung der Betriebssicherheit der Gesamtanlage ergeben. In Bezug auf das Steuergerät selbst ergibt sich in erster Linie eine Verbesserung der Sicherheit vor äußeren Angriffen.

Bevorzugtermaßen kann vorgesehen sein, dass der Vorgang des Überschreibens des Bootloaderbereichs durch eine in der Applikation enthaltene Systemfunktion ausgelöst wird, wobei die Systemfunktion über die Applikation oder einen externen Zugriff gestartet wird. Dies erlaubt es, die Funktion in dem integren System ablaufen zu lassen, ohne hierfür das Einspielen von Daten von außerhalb erlauben zu müssen. Wenn der Überschreibvorgang von vornherein in der Applikation angelegt ist, jedoch einmalig ausgeführt werden kann, ist von außen folglich nur noch das auslösende Ereignis erforderlich.

Hierbei kann es zudem sinnvoll sein, wenn die Systemfunktion einen Sperrparameter zur Indikation der Überschreibung des Bootloaderbereichs setzt, welcher von der Applikation oder über einen externen Zugriff abgefragt werden kann. Dieser Sperrparameter wird gemäß Werkseinstellung so gesetzt, dass der Überschreibvorgang noch nicht erfolgt ist. Sobald der Überschreibvorgang dann abgeschlossen ist, kann über diesen Sperrparameter von intern oder extern abgefragt werden, ob ein Firmwareupdate möglich ist.

Ebenfalls kann bevorzugtermaßen vorgesehen sein, dass die Systemfunktion zunächst einen Sicherheitsparameter abfragt, welcher durch Bestätigung einer Rückfrage bei einem administrativen Nutzer über die Applikation oder einen externen Zugriff gesetzt wird. Dies vermeidet ein versehentliches Überschreiben des Bootloaderbereichs. Vielmehr wird hierdurch zunächst eine Abfrage erforderlich, ob das Überschreiben tatsächlich gewünscht ist. Wird diese Abfrage positiv beschieden, wird der Sicherheitsparameter so gesetzt, dass ein Überschreibvorgang zugelassen wird und erfolgt dann ein Aufruf der Systemfunktion zum Überschreiben des Bootloaderbereichs, so wird die Systemfunktion diesen Überschreibvorgang durchführen. Bedarfsweise kann der Sicherheitsparameter auch mit dem Sperrparameter identisch sein, also ein Parameter für beide beschriebenen Abfragen eingesetzt werden.

Mit einigem Vorteil können externe Zugriffe über eine Programmierschnittstelle, vorzugsweise mittels IO-Link, erfolgen. Hierbei handelt es sich um ein in der Norm IEC 61131-9 festgelegtes Kommunikationssystem, bei welchem mit einem zentralen Steuergerät, dem so genannten IO-Link-Master, und daran angeschlossenen IO-Link-Geräten, also insbesondere Sensoren und Aktoren, kommuniziert wird. Bei dem hier betrachteten Steuergerät handelt es sich um ein solches IO-Link-Gerät, wobei die Komplexität des Geräts von dessen Anwendungsbereich abhängig ist. Die Erfindung ist aber auf jegliches IO-Link-Gerät mit einem Mikrocontroller, in dessen Flashspeicher ein Bootloader vorgesehen ist, anwendbar.

In konkreter Ausgestaltung kann es weiter vorgesehen sein, dass ein Auslesen des Applikationsbereichs über die Programmierschnittstelle gesperrt ist. Dies soll verhindern, dass der Inhalt des Flashspeichers, insbesondere des Applikationsbereichs, ausgelesen und unter Ergänzung eines anderen, neu erzeugten oder anderweitig ausgelesenen Bootloaderbereichs wiederhergestellt wird. Da es sich bei dem Überschreibvorgang um eine verlässliche Löschfunktion handeln soll, wird auf diese Weise die Sicherheit vor neuerlichen Firmwareupdates gewährleistet.

Neben dem Verfahren betrifft die vorliegende Erfindung auch ein Steuergerät mit einem Mikrocontroller, welchem ein Flashspeicher zur Speicherung von Programmcode zugeordnet ist, wobei der Flashspeicher einen Resethandler zum initialen Aufruf eines Bootloaders nach einem Neustart, einen Bootloaderbereich, in welchem der Bootloader gespeichert ist und einen Applikationsbereich, in welchem eine Applikation zum Ablauf auf dem Mikrocontroller gespeichert ist, aufweist. Ein solches Steuergerät in einem gesicherten Zustand ist erfindungsgemäß dadurch gekennzeichnet, dass der Bootloaderbereich überschrieben und dem Resethandler unter Umgehung des Bootloaders ein direkter Verweis auf die Applikation in dem Applikationsbereich zugeordnet ist.

In diesem Zusammenhang ist es besonders bevorzugt, wenn eine Programmierung des Flashspeichers ausschließlich über ein Hardwareinterface ermöglicht ist. Eine Manipulation aus der Ferne, insbesondere über eine Programmierschnittstelle, muss damit entfallen. In abermals bevorzugter Ausgestaltung kann die Möglichkeit eines Auslesens des Flashspeichers von außerhalb des Mikrocontrollers nach einer ersten Programmierung gesperrt werden. Bei der Programmierung, insbesondere vor der Auslieferung, wird der externe Lesezugriff auf den Flashspeicher in diesem Fall gesperrt. Eine zweite Programmierung des Flashspeichers ist allerdings möglich, wenn der Flashspeicher zuvor vollständig gelöscht wird.

Die vorstehend beschriebene Erfindung wird im Folgenden anhand eines Ausführungsbeispiels näher erläutert.

Es zeigen
- Figur 1: einen Mikrocontroller eines Steuergeräts mit einem Flashspeicher während eines Bootvorgangs in schematischer Darstellung,
- Figur 2: den Mikrocontroller gemäß Figur 1 während eines Firmwareupdates in schematischer Darstellung, sowie

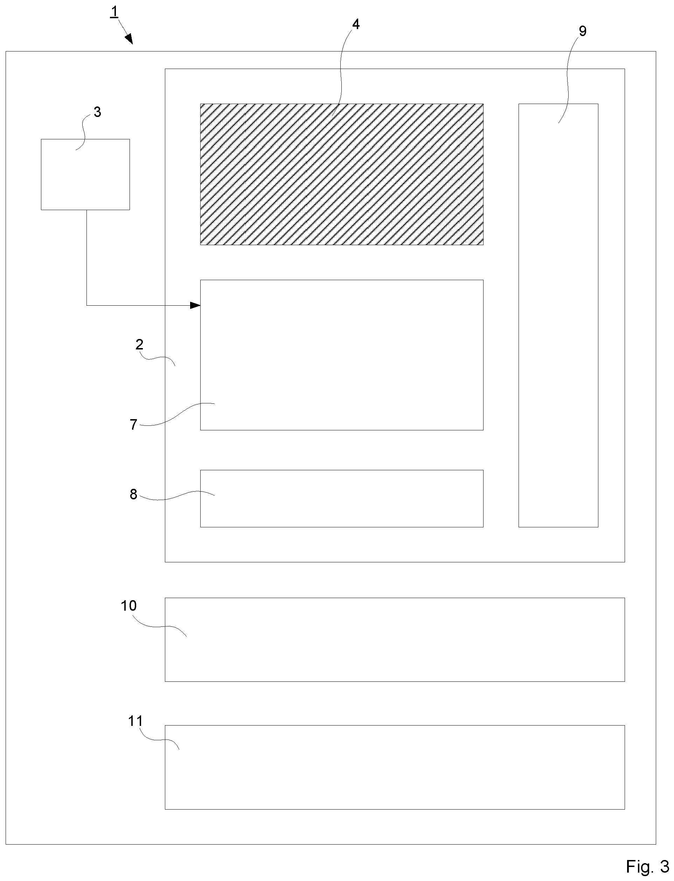

- Figur 3: den Mikrocontroller gemäß Figur 1 nach dem Ablauf des erfindungsgemäßen Überschreibvorgang des Bootloaders in schematischer Darstellung.

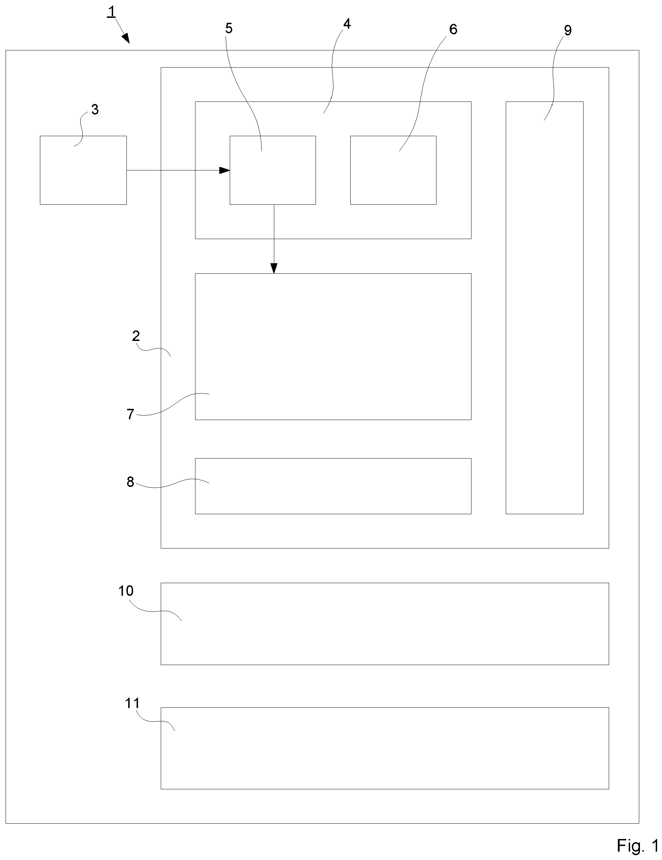

Figur 1 zeigt einen Mikrocontroller 1 eines IO-Link-Geräts, welcher einen Flashspeicher 2 daneben ein externes EEPROM 10 und ein RAM 11 umfasst. Während das RAM 11, also ein Random Access Memory, zur flüchtigen Speicherung aktuell benötigter Daten des Mikrocontrollers 1 eingesetzt wird, dient das externe EEPROM 10, ein elektrisch löschbarer programmierbarer Nur-Lesespeicher, zum Ablegen von solchen Daten, insbesondere von einem Nutzer eingestellten Parametern, die nach dem Neustart des Steuergeräts erhalten bleiben sollen. Das EEPROM 10 wird über einen seriellen Datenbus programmiert, wobei dieser Zugriff freigehalten werden muss.

Dies betrifft aber nicht alle Teile des Flashspeichers 2. Dieser ist in einen Bootloaderbereich 4, einen Applikationsbereich 7 und einen Passwortbereich 8 unterteilt, wobei der Zugriff über eine Programmierschnittstelle 9 erfolgen kann. Während hierin der Bootloaderbereich 4 die Befehle und Daten für den Bootloader enthält, wird die eigentliche Applikation zum Ablauf auf dem Mikrocontroller 1 in dem Applikationsspeicher 7 vorgehalten.

In Figur 1 ist gezeigt, wie ein Resethandler 3, welcher den Mikrocontroller 1 nach einem Neustart hochfahren lässt, zunächst auf einen in dem Bootloaderbereich 4 gespeicherten Programmteil mit einer Prüffunktion 5 verweist, welche prüft, ob ein Firmwareupdate vorliegt. Wenn dies, so wie in Figur 1 dargestellt, nicht der Fall ist, so verweist die Prüffunktion 5 direkt weiter auf den Applikationsbereich 7, wo die Applikation gespeichert ist. Mit dem Start der Applikation aus dem Applikationsbereich 7 erreicht das Steuergerät seinen Betriebszustand.

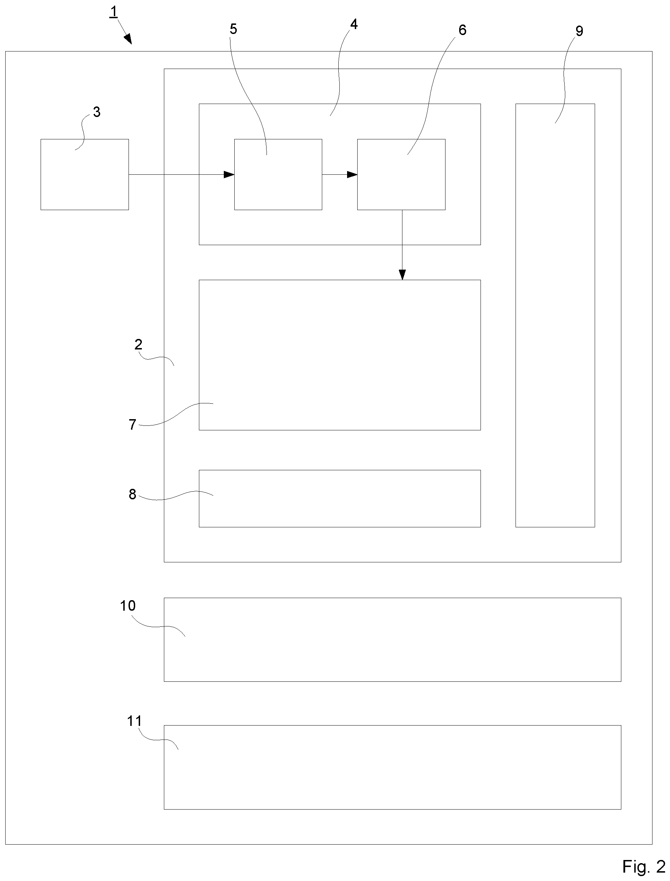

Figur 2 hingegen zeigt den Fall, in dem mit der Prüffunktion 5 festgestellt wird, dass ein Firmwareupdate bereitsteht. Nun wird die Prüffunktion 5 direkt eine Updatefunktion 6 innerhalb des Bootloaderbereichs 4 starten, welche ein Firmwareupdate lädt. Dieses kann sowohl über die Programmierschnittstelle 9 anliegen, als auch über anderweitige Verbindungen wie etwa über eine Internetverbindung, gegebenenfalls unter Zwischenschaltung weiterer Kommunikationsgeräte.

Hierdurch besteht das Problem, dass ein schadhaftes Firmwareupdate heruntergeladen und eingespielt werden kann, welches eine Sicherheitslücke für einen möglichen Angriff schafft und damit das Steuergerät und den Prozess, in dem dieses eingebettet ist, gefährdet. Erst nach dem Update ruft dann die Updatefunktion 6 die Applikation im Applikationsbereich 7 auf. Der Bootloader selbst ist hierbei nicht updatefähig, so dass ein Überschreiben des Bootloaders selbst nicht vorgesehen ist.

Um jedoch die Einfallstür eines möglicherweise schädlichen Firmwareupdates schließen zu können, kann im Rahmen der Applikation eine Systemfunktion aufgerufen werden, mit welcher der Bootloaderbereich 4 überschrieben wird. Eine solche Funktion wird zunächst von einem autorisierten Nutzer entweder direkt vor Ort oder über die Programmierschnittstelle 9 aufgerufen und gestartet. Sodann wird die Systemfunktion prüfen, ob der Bootloaderbereich 4 bereits zuvor überschrieben wurde. Da im Zuge des Überschreibens ein entsprechender Sperrparameter gesetzt wird, kann dies unproblematisch abgefragt werden. Ist der Sperrparameter nicht gesetzt, so kann die Systemfunktion den Überschreibvorgang starten.

Hierbei wird der gesamte oder auch nur ein Teil des Bootloaderbereichs 4 bitweise überschrieben, so dass die ursprünglich gespeicherten Daten auch im Rahmen einer Wiederherstellung nicht mehr verfügbar sind. Das Überschreiben kann mit willkürlichen oder mit immer gleichen Werten erfolgen, mit dem Effekt, dass der Bootloaderbereich 4 anschließend nicht mehr lesbar ist. Der Resethandler 3 wird hierbei so verändert, dass er nicht mehr auf den Bootloaderbereich 4, sondern direkt auf den Applikationsbereich 7 und die darin zu startende Applikation gerichtet ist.

Bei künftigen Neustarts des Steuergeräts wird der überschriebene Bootloaderbereich 4 übergangen und sogleich die Applikation gestartet. Weitere Firmwareupdates, welche über die Funktionen 5 und 6 des Bootloaderbereichs 4 eingespielt worden wären, werden nicht mehr abgefragt und können aufgrund einer Sperrung des Schreibzugriffs über die Programmierschnittstelle 9 nicht auf den Flashspeicher übertragen werden. Eine Manipulation des Steuergeräts über schadhafte Firmware ist damit wirkungsvoll verhindert.

Vorstehend beschrieben sind somit ein Verfahren zur Verbesserung der Betriebssicherheit eines Steuergeräts mit einem Mikrocontroller und ein solches Steuergerät, bei denen Firmwareupdates weder grundsätzlich zugelassen noch grundsätzlich ausgeschlossen sind, bei denen aber ein Angriff durch ein schadhaftes Firmwareupdate dennoch bedarfsweise ausgeschlossen werden kann.

### BEZUGSZEICHENLISTE

- 1: Mikrocontroller
- 2: Flashspeicher
- 3: Resethandler
- 4: Bootloaderbereich
- 5: Prüffunktion
- 6: Updatefunktion
- 7: Applikationsbereich
- 8: Passwortbereich
- 9: Programmierschnittstelle
- 10: EEPROM
- 11: RAM

## Patentansprüche

1. Verfahren zur Verbesserung der Betriebssicherheit eines Steuergeräts mit einem Mikrocontroller (1), welchem ein Flashspeicher (2) zur Speicherung von Programmcode zugeordnet ist, wobei der Flashspeicher (2) einen Resethandler (3) zum initialen Aufruf eines Bootloaders nach einem Neustart, einen Bootloaderbereich (4), in welchem der Bootloader gespeichert ist, wobei der Bootloaderbereich (4) eine Firmwareupdatefunktion aufweist, und einen Applikationsbereich (7), in welchem eine Applikation zum Ablauf auf dem Mikrocontroller (1) gespeichert ist, aufweist,
**dadurch gekennzeichnet, dass** der Bootloaderbereich (4) überschrieben und dem Resethandler (3) unter Umgehung des Bootloaders ein direkter Verweis auf die Applikation in dem Applikationsbereich (7) zugeordnet wird.

2. Verfahren gemäß Anspruch 1, **dadurch gekennzeichnet, dass** der Vorgang des Überschreibens des Bootloaderbereichs (4) durch eine in der Applikation enthaltene Systemfunktion ausgelöst wird, wobei die Systemfunktion über die Applikation oder einen externen Zugriff gestartet wird.

3. Verfahren gemäß einem der vorhergehenden Ansprüche, **dadurch gekennzeichnet, dass** die Systemfunktion einen Sperrparameter zur Indikation der Überschreibung des Bootloaderbereichs (4) setzt, welcher von der Applikation oder über einen externen Zugriff abgefragt werden kann.

4. Verfahren gemäß einem der Ansprüche 2 oder 3, **dadurch gekennzeichnet, dass** die Systemfunktion zunächst einen Sicherheitsparameter abfragt, welcher durch Bestätigung einer Rückfrage bei einem administrativen Nutzer über die Applikation oder einen externen Zugriff gesetzt wird.

5. Verfahren gemäß einem der Ansprüche 2 bis 4, **dadurch gekennzeichnet, dass** externe Zugriffe über eine Programmierschnittstelle (9), vorzugsweise mittels IO-Link, erfolgen.

6. Verfahren gemäß einem der vorhergehenden Ansprüche, **dadurch gekennzeichnet, dass** ein Auslesen des Applikationsbereichs (7) über die Programmierschnittstelle (9) gesperrt ist.

7. Steuergerät mit einem Mikrocontroller (1), welchem ein Flashspeicher (2) zur Speicherung von Programmcode zugeordnet ist, wobei der Flashspeicher (2) einen Resethandler (3) zum initialen Aufruf eines Bootloaders nach einem Neustart, einen Bootloaderbereich (4), in welchem der Bootloader gespeichert ist, wobei der Bootloaderbereich (4) eine Firmwareupdatefunktion aufweist, und einen Applikationsbereich (7), in welchem eine Applikation zum Ablauf auf dem Mikrocontroller (1) gespeichert ist, aufweist,
**dadurch gekennzeichnet, dass** der Bootloaderbereich (4) überschrieben und dem Resethandler (3) unter Umgehung des Bootloaders ein direkter Verweis auf die Applikation in dem Applikationsbereich (7) zugeordnet ist.

8. Steuergerät gemäß Anspruch 7, **dadurch gekennzeichnet, dass** eine Programmierung des Flashspeichers (2) ausschließlich über ein Hardwareinterface ermöglicht ist.

9. Steuergerät gemäß Anspruch 8, **dadurch gekennzeichnet, dass** die Möglichkeit eines Auslesens des Flashspeichers (2) von außerhalb des Mikrocontrollers (1) nach einer ersten Programmierung gesperrt ist.

## Claims

1. A method for improving the operational reliability of a control device having a microcontroller (1) to which a flash memory (2) for storing program code is assigned, the flash memory (2) having a reset handler (3) for an initial call of a bootloader after a restart, a bootloader area (4) in which the bootloader is stored, the bootloader area (4) having a firmware update function, and an application area (7) in which an application for running on the microcontroller (1) is stored,
**characterized in that** the bootloader area (4) is overwritten and a direct reference to the application in the application area (7) is assigned to the reset handler (3), bypassing the bootloader.

2. The method according to claim 1, **characterized in that** the process of overwriting the bootloader area (4) is triggered by a system function contained in the application, the system function being started via the application or an external access.

3. The method according to any of the preceding claims, **characterized in that** the system function sets a blocking parameter for indicating the overwriting of the bootloader area (4), which can be queried by the application or via an external access.

4. The method according to any of claims 2 or 3, **characterized in that** the system function first queries a security parameter, which is set by confirming a query with an administrative user via the application or an external access.

5. The method according to any of claims 2 to 4, **characterized in that** the external accesses are made via a programming interface (9), preferably by means of an IO-Link.

6. The method according to any of the preceding claims, **characterized in that** a readout of the application area (7) via the programming interface (9) is blocked.

7. A control device having a microcontroller (1) to which a flash memory (2) for storing program code is assigned, the flash memory (2) having a reset handler (3) for an initial call of a bootloader after a restart, a bootloader area (4) in which the bootloader is stored, the bootloader area (4) having a firmware update function, and an application area (7) in which an application for running on the microcontroller (1) is stored,
**characterized in that** the bootloader area (4) is overwritten and a direct reference to the application in the application area (7) is assigned to the reset handler (3), bypassing the bootloader.

8. The control device according to claim 7, **characterized in that** programming of the flash memory (2) is possible exclusively via a hardware interface.

9. The control device according to claim 8, **characterized in that** the possibility of reading out the flash memory (2) from outside the microcontroller (1) is blocked after initial programming.

## Revendications

1. Procédé d'amélioration de la sécurité de fonctionnement d'un appareil de commande comportant un microcontrôleur (1) auquel est affectée une mémoire flash (2) destinée à mémoriser un code de programme, la mémoire flash (2) comportant un gestionnaire de réinitialisation (3) pour un appel initial d'un chargeur d'amorçage après un redémarrage, une zone de chargeur d'amorçage (4) dans laquelle le chargeur d'amorçage est mémorise, la zone de chargeur d'amorçage (4) ayant une fonction de mise à jour du micrologiciel, et une zone d'application (7) dans laquelle est mémorisée une application destinée à fonctionner sur le microcontrôleur (1),
**caractérisé en ce que** la zone de chargeur d'amorçage (4) est écrasée et qu'une référence directe à l'application dans la zone d'application (7) est attribuée au gestionnaire de réinitialisation (3), en contournant le chargeur d'amorçage.

2. Le procédé selon la revendication 1, **caractérisé en ce que** le processus d'écrasement de la zone de chargeur d'amorçage (4) est déclenché par une fonction système contenue dans l'application, la fonction système étant lancée via l'application ou un accès externe.

3. Le procédé selon l'une des revendications précédentes, **caractérisé en ce que** la fonction système définit un paramètre de blocage pour indiquer l'écrasement de la zone de chargeur d'amorçage (4), qui peut être interrogé par l'application ou via un accès externe.

4. Le procédé selon l'une des revendications 2 ou 3, **caractérisé en ce que** la fonction système interroge d'abord un paramètre de sécurité, qui est défini en confirmant une interrogation avec un utilisateur administratif par l'intermédiaire de l'application ou d'un accès externe.

5. Le procédé selon l'une des revendications 2 à 4, **caractérisé en ce que** les accès externes sont effectués via une interface de programmation (9), de préférence au moyen d'un IO-Link.

6. Le procédé selon l'une des revendications précédentes, **caractérisé en ce que** la lecture de la zone d'application (7) via l'interface de programmation (9) est bloquée.

7. Appareil de commande comportant un microcontrôleur (1) auquel est affectée une mémoire flash (2) destinée à mémoriser un code de programme, la mémoire flash (2) comportant un gestionnaire de réinitialisation (3) pour un appel initial d'un chargeur d'amorçage après un redémarrage, une zone de chargeur d'amorçage (4) dans laquelle le chargeur d'amorçage est mémorise, la zone de chargeur d'amorçage (4) ayant une fonction de mise à jour du micrologiciel, et une zone d'application (7) dans laquelle est mémorisée une application destinée à fonctionner sur le microcontrôleur (1),
**caractérisé en ce que** la zone de chargeur d'amorçage (4) est écrasée et qu'une référence directe à l'application dans la zone d'application (7) est attribuée au gestionnaire de réinitialisation (3), en contournant le chargeur d'amorçage.

8. L'appareil de commande selon la revendication 7, **caractérisé en ce que** la programmation de la mémoire flash (2) est possible exclusivement via une interface matérielle.

9. L'appareil de commande selon la revendication 8, **caractérisé en ce que** la possibilité de lire la mémoire flash (2) depuis l'extérieur du microcontrôleur (1) est bloquée après la programmation initiale.
